# EUROPÄISCHE PATENTSCHRIFT

(11) **EP 0 686 612 B1**
(45) Veröffentlichungstag und Bekanntmachung des Hinweises auf die Patenterteilung: **04.11.1998**
(21) Anmeldenummer: 95106626.5
(22) Anmeldetag: 03.05.1995
(51) Int. Cl.: C04B 41/91, C04B 41/00

(54) **Verfahren zur Herstellung von strukturierten Keramikoberflächen**
Process for the production of structured ceramic surfaces
Procédé pour la fabrication de surfaces céramiques structurées

(30) Priorität: 10.05.1994 DE 4416479
(43) Veröffentlichungstag der Anmeldung: 13.12.1995
(73) Patentinhaber: RAUSCHERT GMBH & CO. KG, D-96332 Pressig (DE)
(72) Erfinder: Moeller, Friedrich Dipl.Ing., D-96465 Neustadt/Coburg (DE)
(74) Vertreter: Weber, Dieter, Dr.

(56) Entgegenhaltungen:
- DE-A- 3 835 794
- PROCEEDINGS OF THE SPIE- THE INTERNATIONAL SOCIETY FOR OPTICAL ENGINEERING. LASER BEAM SURFACE TREATING AND COATING, 29-30 JUNE 1988, DEADBORN MICHIGAN, Bd. 957, Seiten 119-126, SCHMATJAKO K. J. & AL. 'Precision machining of ceramic materials by excimer laser irradiation.'
- DATABASE INSPEC INSTITUTE OF ELECTRICAL ENGINEERS, STEVENAGE, GB Inspec No. 4883612, SHIGEMATSU I ET AL 'Machining of half-sintered ceramics using a Q-switched YAG laser' & REVIEW OF LASER ENGINEERING, NOV. 1994, JAPAN, Bd. 22, Nr. 11, ISSN 0387-0200, Seiten 899-916,
- LASER UND OPTOELEKTRONIK, Bd. 21, Nr. 3, Juni 1989 STUTTGART, DE, Seiten 107-115, SOWADA ULRICH & AL. 'Excimerlaser-Bearbeitung keramischer Werkstoffe-Ergebnisse und physikalische Vorgänge'
- SPRECHSAAL, Bd. 124, Nr. 9, September 1991 COBURG, DE, Seiten 554-561, GEDRAT O. & AL. 'Bearbeitung technischer Keramik mit Laserstrahlung'
- LASER UND OPTOELEKTRONIK, Nr. 2, 1988 STUTTGART, DE, Seiten 96-101, SOWADA U. & AL. 'Excimerlaser für die Materialbearbeitung- Verfahren und Resultate.'

## Beschreibung

Die vorliegende Erfindung betrifft ein Verfahren und eine Vorrichtung zur Herstellung von strukturierten Keramikoberflächen, wobei die Oberfläche eines Keramikteiles von einem Laserstrahl entsprechend einem vorgegebenen Strukturmuster überstrichen wird und dadurch Keramikmaterial abgetragen wird.

Ein solches Verfahren ist aus der DE-A-38 35 794 bekannt. Bei dem bekannten Verfahren werden Strukturen in der Keramik im Zustand der Grünfolie, d.h. vor dem Sintern, hergestellt.

Aus dem Tagungsbericht "Proceedings of the SPIE - The International Society for Optical Engineering, Laserbeam Surface Treating and Coating, 29 - 30 June 1988, Deadborn Michigan, Bd. 957, Seiten 119 - 126" ist die Herstellung von Strukturen in Keramikoberflächen mit Hilfe von Lasern in Maskentechnik bekannt. Die Abtragungsraten sind danach sehr gering und betragen für die meisten der untersuchten Materialien 0,01 bis 0,02 µm/(J/cm²) pro Laserpuls. Aus der Zeitschrift "Laser und Optoelektronik, Nr. 2, 1988, Stuttgart, Seiten 96 - 101 ist die Materialbearbeitung mittels Excimerlasern bekannt, die eine Wellenlänge haben, welche kleiner ist als die des sichtbaren Lichtes. In dieser Druckschrift wird ebenfalls die Strukturierung von Keramikoberflächen beschrieben, mit Abtragraten von 0,1 µm bei einer Laserleistung von 10 Joule/cm².

Die bekannten Verfahren zu Strukturierung von gesintertem Keramikmaterial mit Hilfe von Lasern beschränken sich also auf Anwendungen, bei welchen nur äußerst geringe Materialmengen von der Oberfläche abgetragen werden, z.B. zum Einritzen eines feinen Oberflächenmusters, z.B. zum Zwecke der Kenntlichmachung und Beschriftung. Die Tiefe der so in einer Keramikoberfläche erzeugten Strukturen überschreitet dabei selten wenige Mikrometer und liegt im allgemeinen deutlich unter 100 Mikrometer. Aus den vorgenannten Entgegenhaltungen ist auch die Herstellung sehr dünner Bohrungen mit Hilfe von Lasern bekannt, bei denen jedoch ebenfalls nur sehr geringe Materialmengen aus dem Keramikmaterial entfernt werden. Zwar ist es grundsätzlich möglich, auch erheblich mehr Keramikmaterial mit Lasern von einer Keramikoberfläche abzutragen, z.B. durch Verwendung eines CO₂-Lasers mit entsprechend hoher Leistung, jedoch ist es nicht möglich, auf diese Weise sauber definierte Strukturen mit engen Toleranzen zu erzeugen, da das Keramikmaterial unter der Wärmeeinwirkung eines CO₂-Laserstrahls schnell aufschmilzt, teilweise verdampft und unkontrolliert verspritzt und sich teilweise auf der Oberfläche niederschlägt.

Will man dagegen sauber strukturierte Oberflächen von Keramikmaterialien erzeugen, die nicht durch eine entsprechende Formgebung beim Herstellen der Keramik von vornherein in die Oberfläche eingebracht wurden, so werden nach dem Stand der Technik derartige Keramikoberflächen mechanisch mit Diamantwerkzeugen geschliffen, wobei derartige Werkzeuge jedoch wegen der Härte des Keramikmaterials relativ schnell verschleißen und auch nur eine geringe Abtragleistung aufweisen, was die nachträgliche Herstellung von Strukturen in Keramikoberflächen außerordentlich langwierig und teuer macht.

Ein Anwendungsbeispiel für auf diese Weise herzustellende Keramikstrukturen bilden strukturierte Einlageplatten aus Keramik für Gießformen. Im Sinne der vorliegenden Erfindung umfaßt der Begriff "Keramik" auch Glaskeramik und Sintermetalle, die sich mit mechanischen Abtragsverfahren ebenfalls nur schwer strukturieren lassen.

Der vorliegenden Erfindung liegt daher die Aufgabe zugrunde, ein Verfahren zur Strukturierung von Keramikoberflächen zu schaffen, mit welchem Strukturen mit relativ hoher Präzision, einer ausreichenden Abtragsleistung und zu vertretbaren Kosten hergestellt werden können.

Diese Aufgabe wird dadurch gelöst, daß zur Erzeugung von Strukturen von mehr als 0,1 mm Tiefe und/oder mehr als 1 mm Breite ein poröses, gasdurchlässiges Keramikmaterial, wobei der Begriff Keramik auch Glaskeramik und Sintermetalle einschließt, mit einer Porosität von mindestens 15% verwendet wird, und daß die Laserbearbeitung der Keramikoberfläche nach dem Sintern und gegebenenfalls Schleifen des Keramikteiles vorgenommen wird.

Überraschenderweise hat sich gezeigt, daß durch die Kombination der Verwendung eines Lasers mit einer Wellenlänge, die geringer ist als die des sichtbaren Lichtes und eines gasdurchlässigen Keramikmaterials mit einer Porosität von mindestens 15% die Abtragsraten in gesinterter Keramik gegenüber nicht porösem Keramikmaterial um ein Mehrfaches gesteigert werden können, so daß aufgrund dieser überraschend hohen Abtragungsraten auch hinsichtlich des Volumens erhebliche Strukturen in dem Keramikmaterial hergestellt werden können.

Dabei sollte die Porosität der Keramik, welche man z.B. durch Dichtemessung und Vergleich mit der maximal möglichen Dichte oder der theoretischen Dichte des Keramikmaterials bestimmen kann, mindestens 15 % betragen. Unterhalb von 15 % Porosität ist eine Gasdurchlässigkeit der Keramik kaum zu erreichen, die jedoch für die Funktion des erfindungsgemäßen Verfahrens von wesentlicher Bedeutung ist. Erfindungsgemäß wird deshalb eine Porosität im Bereich zwischen 20 % und 50 % bevorzugt, mit besonders bevorzugten Porositätswerten im Bereich von 30 % bis 45 %. Auch höhere Porositätswerte sind nicht ausgeschlossen, wenn es auf die mechanische Stabilität und/oder eine glatte Oberfläche des Keramikmaterials nicht besonders ankommt.

Die erfindungsgemäße Kombination, nämlich Verwendung eines Lasers mit relativ kurzer Wellenlänge unterhalb des sichtbaren Bereichs, also im ultravioletten Bereich, in Verbindung mit der porösen Keramik hat gezeigt, daß sehr sauber und exakt definierte Strukturen mit einer Abtragsleistung erzielt werden können, die um ein Vielfaches höher liegt als bei der bekannten Behandlung von Keramikoberflächen mit Lasern. Dies ist nicht einfach auf eine Steigerung der Laserenergie zurückzuführen, da eine Energieerhöhung allein, wie oben bereits am Beispiel eines CO₂-Lasers dargelegt wurde, nach bisherigem Kenntnisstand die Erzeugung sauberer Strukturen und auch eine nennenswerte Erhöhung der Abtragsraten nicht zuließ.

Daß die Erzeugung sehr sauberer Strukturen mit engen Toleranzen mit den erfindungsgemäßen Randbedingungen dennoch möglich ist, liegt vermutlich an der kombinierten Wirkung der genannten Merkmale. Zum einen ist die Energie der einzelnen Laserphotonen so hoch, daß sie die Bindungen zwischen den Substanzen, aus welchen die Keramik besteht (also insbesondere SiO₂, aber auch Al₂O₃) aufbricht, so daß das Material gar nicht erst aufschmilzt, sondern sofort verdampft. Weiterhin haben UV-Laser eine hinreichende Eindringtiefe in das Keramikmaterial, um nicht nur an der Oberfläche eine entsprechende Wirkung zu erzielen, und schließlich trägt in diesem Zusammenhang die Porosität und Gasdurchlässigkeit dazu bei, daß das unter der Lasereinwirkung entstehende Gas aus den Einzelbestandteilen des Keramikmaterials leicht entweichen kann, ohne zu großräumigen Zerstörungen zu führen. Die Porosität trägt dabei auch zu einem noch besseren Eindringen des Laserstrahles bei, und die mit der Porosität verbundenen Fehlstellen können darüber hinaus auch als Absorptionszentren für die Laserstrahlung wirken.

Bevorzugte Ausgestaltungen des erfindungsgemäßen Verfahrens ergeben sich aus den Unteransprüchen und werden im folgenden noch kurz erläutert.

Gemäß der Erfindung sollen Strukturen von mehr als 0,1 mm Tiefe und/oder mehr als 1 mm Breite erzeugt werden. Für Strukturen geringerer Tiefe und kleiner Flächenausdehnung lohnt sich der Einsatz eines UV-Lasers womöglich nicht.

Ein besonderer Vorteil der kombinierten Wirkung aus porösem, gasdurchlässigen Keramikmaterial und dem Einsatz eines UV-Lasers besteht darin, daß auch Strukturen mit nahezu beliebigem Flankenwinkel erzeugt werden können. Wird also beispielsweise eine Nut oder eine Einsenkung in eine Keramikoberfläche eingebracht, so kann der Übergang von der so erzeugten Vertiefung zu dem verbleibenden Teil der Keramikoberfläche nicht nur mit mehr oder weniger vertikalen, senkrecht zur Oberfläche verlaufenden Flankenwinkeln, sondern auch mit Flankenwinkeln unterhalb von 70° oder auch unter 60° erzeugt werden. Dies erreicht man durch eine gezielte Einstellung des Intensitätsprofils des Laserstrahls. Dabei kann die Intensität zum einen dadurch variiert werden, daß der Laserstrahl den Randbereich bzw. Flankenbereich einer entsprechenden Struktur mit von innen nach außen immer kürzer werdender Zeitdauer überstreicht, bevorzugt ist jedoch die Anwendung einer Maskentechnik, die aber gegebenenfalls auch mit einer gezielt zeitgesteuerten Bestrahlung bestimmter Flächenbereiche kombiniert werden kann.

Bei der Maskentechnik sind vorzugsweise für die Erzeugung von flachen Flankenwinkeln von weniger als 60° oder 70° relativ zur Oberfläche des Keramikmaterials Lochmasken vorgesehen, deren Loch bzw. Löcher zum Rand hin, d.h. über den Flankenverlauf hinweg, verjüngt zuläuft. Dabei versteht es sich, daß das Loch vor allem im Bereich der Verjüngung so bemessen ist, daß durch diese Verjüngung ein Teil des Laserstrahles ausgeblendet wird. Auf diese Weise kann man durch entsprechende Lochmaskenformen sehr unterschiedliche Intensitätsprofile über den Querschnitt des Laserstrahles erzeugen, die sich in einer entsprechenden Struktur einer damit erzeugten Einsenkung oder Nut niederschlagen.

Bevorzugt sind Lochmaskenformen, bei welchen das Loch bzw. die Löcher Ellipsen- oder Rautenform haben, wobei es letztlich nur darauf ankommt, daß die Endabschnitte oder zumindest der Abschnitt auf einer Seite, wo eine entsprechende Flanke erzeugt werden soll, in Form einer Rautenhälfte oder einer Ellipsenhälfte ausläuft, um die nach außen abnehmende Intensität der Laserstrahlung sicherzustellen.

Da, wie bereits erwähnt, durch die UV-Strahlung die kovalenten Bindungen zwischen den Keramikteilen unmittelbar aufgebrochen werden, so daß die Teilchen dissoziieren und als Dampf oder Plasma austreten, ist es zweckmäßig, wenn die entstehenden Gase von der Oberfläche in der Nähe des Laserstrahles abgesaugt werden. Durch die Absaugung ist auf jeden Fall sichergestellt, daß das abgetragene Keramikmaterial sich nicht an anderer Stelle auf der Keramikoberfläche niederschlägt. Bei der Anwendung de erfindungsgemäßen Verfahrens auf Glaskeramik oder Sintermetalle (Hartstoffe), kann im übrigen eine Anpassung der Laserwellenlänge an kleinere oder größere Bindungskräfte der kovalenten oder metallischen Bindung erforderlich bzw. möglich sein. Es reichen dann möglicherweise Wellenlängen im sichtbaren Bereich z. B. unter 500 nm oder umgekehrt erst Wellenlängen unterhalb von 300 nm für die Erzeugung sauberer Strukturen aus.

Weiterhin sieht die Erfindung vor, daß als UV-Laser vorzugsweise ein Excimerlaser einzusetzen ist. Derartige Laser sind mit den verschiedensten Wellenlängen und in den verschiedensten Leistungsbereichen kommerziell verfügbar. Die Wellenlänge der Laserstrahlung sollte für die Bearbeitung normaler Keramiken auf SiO₂-Basis vorzugsweise unterhalb von 380 nm liegen, um eine genügend hohe Photonenenergie zu haben, welche die kovalenten Bindungen zwischen den Keramikteilen aufbricht. Konkret erwiesen sich XeCl-Excimerlaser mit 308 nm Wellenlänge und XeF-Laser mit 351 nm Wellenlänge als gut geeignet. Auch Nd:YAG-Laser erscheinen grundsätzlich als geeignet.

Für eine gleichmäßige und konturenscharfe Abtragung des Materials hat es sich als günstig erwiesen, wenn während des Abtragens eine kontinuierliche Bewegung des Laserstrahls erfolgt, die aus einer Überlagerung einer Kreisbewegung mit einer Translationsbewegung besteht. Hier- durch erreicht man, daß nicht bestimmte Bereiche der abzutragenden Struktur lokal übermäßig aufgeheizt werden, was möglicherweise zu Konturungenauigkeiten führen könnte. Stattdessen werden die meisten Bereiche (eventuell mit Ausnahme von Flankenteilen) von dem Laserstrahl mehrfach überstrichen, und der Materialabtrag und das Entweichen der entstehenden Gase verteilt sich über eine größere Fläche und/oder einen größeren Zeitraum.

Neben der Porosität haben sich auch andere Materialeigenschaften der Keramik als günstig erwiesen. So sollte beispielsweise der SiO₂-Anteil der Keramik relativ hoch und nicht unter 50 %, vorzugsweise über 60 % liegen. Dagegen kann der Aluminiumoxidanteil (Al₂O₃) relativ niedrig im Bereich zwischen 1% und 35 % liegen. Sehr gute Erfolge wurden erzielt mit einer Keramik, welche einen SiO₂-Anteil von 65 % und einen Al₂O₃-Anteil von etwa 25 % hatte, wobei die Porosität des Materials durch entsprechende Porosierungsmittel auf etwa 40 % eingestellt wurde. Auch eine Zusammensetzung mit einem SiO₂-Anteil von 85 % und einemn Al₂O₃-Anteil von etwa 2 % hatte hinsichtlich der Strukturerzeugung mittels UV-Laser sehr günstige Eigenschaften, ist jedoch bei der Herstellung der Keramikmasse im großtechnischen Maßstab schwieriger zu handhaben.

Dieses Material hat einen niedrigen Wärmeausdehnungskoeffizienten, so daß thermische Spannungen gering bleiben, und gleichzeitig eine hohe Absorptionstiefe für die Laserstrahlung eines Excimerlasers.

Schließlich kann man besonders genaue Strukturen dann erzeugen, wenn die Laserbestrahlung erst nach dem Sintern und gegebenenfalls dem Abschleifen der Keramikoberfläche erfolgt. Nachträgliches Sintern und Schleifen könnte ansonsten die bereits erzeugten Strukturen nochmals verformen oder zerstören. Daß das Material durch das Sintern mechanisch widerstandsfähiger wird, ist dabei ohne Bedeutung, weil die Laserstrahlung ohnehin alle Bindungen zwischen den Keramikteilen aufbricht.

Die Vorrichtung zur Durchführung des Verfahrens gemäß der vorliegenden Erfindung weist einen Excimerlaser auf und sollte auch eine oder mehrere Masken aufweisen, die jeweils ein oder mehrere Löcher haben, wobei der Randbereich mindestens eines solchen Loches auf mindestens einer Seite verjüngt zulaufen sollte, um die Intensität des durch das Maskenloch hindurchtretenden Laserstrahls zu dieser Seite hin kontinuierlich abnehmen zu lassen, um durch ein solches Intensitätsprofil unterschiedliche Abtragtiefen entlang des sich verjüngenden Abschnittes zu erreichen, was zu gegenüber der Oberfläche des Keramikmaterials geneigt verlaufenden Flankenflächen führt.

Es versteht sich, daß das Maskenmaterial die Laserstrahlung reflektieren sollte und daß das reflektierte Laserlicht in geeigneter Weise absorbiert oder zerstreut werden sollte, damit es keine Beschädigung an umgebenden Teilen oder Schäden an Personen hervorrufen kann.

Im allgemeinen bestehen derartige Masken aus Metall.

Weitere Vorteile, Merkmale und Anwendungsmöglichkeiten der vorliegenden Erfindung werden deutlich anhand der folgenden Erläuterung einiger Figuren.
- Figur 1: zeigt schematisch das Funktionsprinzip der Erfindung anhand einer im Querschnitt dargestellten, trapezförmigen Grube unterhalb eines durch eine Maske eingeschränkten Laserstrahls,
- Figur 2: zeigt eine Draufsicht von oben auf die betreffende Maske und
- Figur 3: zeigt Beispiele für zu erzeugende Strukturen im Querschnitt und in der Draufsicht.

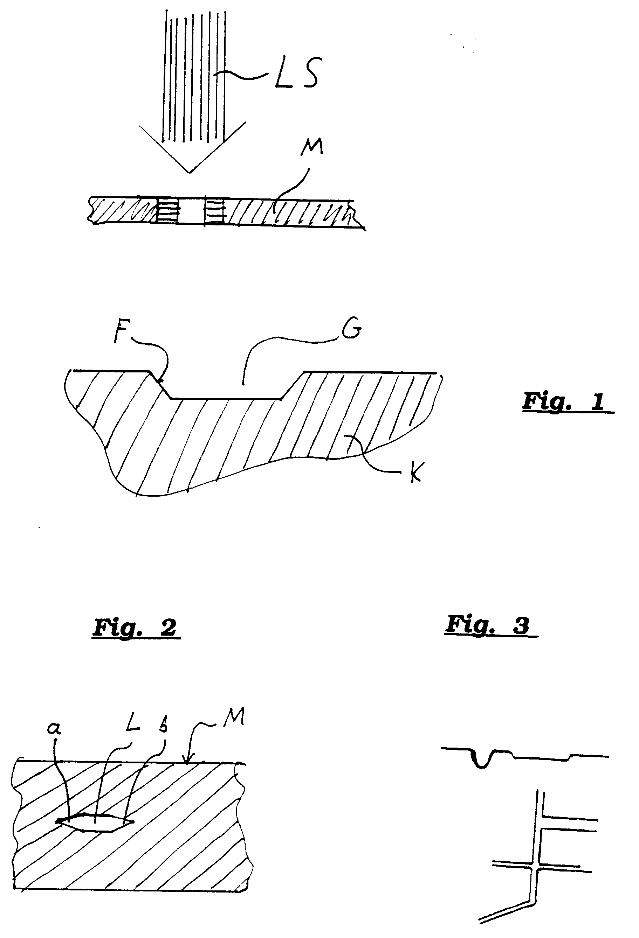

Man erkennt im oberen Bereich der Figur 3 einen mehr oder weniger stark gebündelten, wahlweise aber auch aufgeweiteten Laserstrahl LS, der auf ein Loch L in einer Maske M gerichtet ist, durch das Loch L hindurchtritt und auf die Oberfläche eines Keramikteiles K auftrifft, wo eine durch den Laserstrahl LS erzeugte Grube oder Nut G mit trapezförmigem Querschnitt dargestellt ist. Man kann sich vorstellen, daß der Laserstrahl LS zusammen mit der Maske M senkrecht zur Papierebene und auch horizontal in der Papierebene bewegt wird, um die Struktur der Grube G zu erzeugen.

Beispielsweise könnte der Laserstrahl zusammen mit der Maske in einer Ebene senkrecht zur Papierebene auf kleinen Kreisbahnen bewegt werden, wobei der Außendurchmesser des so von dem Laserstrahl erfaßten Kreises gerade der Breite der Nut G entspricht, und wobei dieser Kreisbewegung eine geradlinige Translationsbewegung senkrecht zur Papierebene (in Richtung des gewünschten Nutverlaufes) überlagert ist, so daß der Kreis mit jedem Umlauf senkrecht zur Papierebene kontinuierlich verschoben wird.

Im vorliegenden Fall ist angenommen, daß der Laserstrahl LS so stark aufgeweitet oder anders gesprochen das Loch L so klein ist, daß der Laserstrahl LS die gesamte Querschnittsfläche des Loches L erfaßt, welches in der Draufsicht nochmals in Figur 2 erkennbar ist. Wie man in Figur 2 sieht, ist der zentrale Teil des Loches L im Querschnitt im wesentlichen rechteckig und hat zu beiden Seiten hin zwei dreieckig spitz zulaufende Ausläufer a und b. Im Querschnitt der Figur 1 sind diese verjüngt zulaufenden Abschnitte durch horizontale Schraffuren angedeutet.

Besonders im Bereich dieser spitz zulaufenden Abschnitte wird ein Teil des Laserstrahles LS durch die Maske M ausgeblendet, so daß, vom Zentrum des Loches L aus gesehen, die Intensität des Laserstrahls in den Abschnitten a und b nach außen hin abnimmt. Aufgrund der geringeren Laserstrahlintensität wird in den von den Abschnitten a und b überstrichenen Bereichen weniger Material abgetragen und zwar in etwa proportional zu der Intensität, so daß sich schräg ansteigende Flankenflächen F ergeben, deren Erstreckung in Querrichtung der Länge der Abschnitte a bzw. b in dieser Richtung entsprechen. Falls zusätzlich eine horizontale Bewegungskomponente der Maske und des Laserstrahles hinzukommt, kann sich das Profil der Grube oder Nut G noch etwas ändern, wobei die Tiefe im wesentlichen proportional zur integrierten Gesamtintensität der in einem bestimmten Bereich aufgenommenen Laserstrahlung ist.

Figur 3 zeigt im Profil neben der Trapezform noch eine abgerundete, tiefere Nut oder Einsenkung, wie man sie z.B. mit einer einfachen elliptischen oder auch einer kreisförmigen Maske ohne Querbewegung des Laserstrahls erzielen kann, während in dem Bild darunter schematisch die Draufsicht auf ein Beispiel einer mit dem Laserstrahl zu erzeugenden Strukturoberfläche gezeigt ist.

## Patentansprüche

1. Verfahren zur Herstellung von strukturierten Keramikoberflächen, wobei die Oberfläche eines Keramikteiles (K) von einem Laserstrahl (LS) entsprechend einem vorgegebenen Strukturmuster überstrichen und dadurch Keramikmaterial abgetragen wird, wobei die die Struktur erzeugende Laserstrahlung (LS) eine Wellenlänge hat, die kürzer ist als die des sichtbaren Lichtes, dadurch gekennzeichnet, daß zur Erzeugung von Strukturen von mehr als 0,1 mm Tiefe und/oder mehr als 1 mm Breite ein poröses, gasdurchlässiges Keramikmaterial (K), wobei der Begriff Keramik auch Glaskeramik und Sintermetalle einschließt, mit einer Porosität von mindestens 15% verwendet wird, und daß die Laserbearbeitung der Keramikoberfläche nach dem Sintern und gegebenenfalls Schleifen des Keramikteiles (K) vorgenommen wird.

2. Verfahren nach Anspruch 1, dadurch gekennzeichnet, daß die Porosität im Bereich zwischen 20 % und 50 % und vorzugsweise im Bereich zwischen 30 % und 45 % liegt.

3. Verfahren nach einem der Ansprüche 1 oder 2, dadurch gekennzeichnet, daß die in Form von Vertiefungen erzeugten Strukturen mit einem Übergang zum verbleibenden Teil der Keramikoberfläche mit einem Flankenwinkel von weniger als 70° bezüglich dieser Oberfläche des Keramikteiles, vorzugsweise mit einem Flankenwinkel von weniger als 60°, hergestellt werden.

4. Verfahren nach einem der Ansprüche 1 bis 3, dadurch gekennzeichnet, daß der Flankenwinkel der in die Oberfläche eingearbeiteten Strukturen durch Einstellen eines entsprechenden Intensitätsprofils des Laserstrahls (LS) erzeugt wird.

5. Verfahren nach Anspruch 4, dadurch gekennzeichnet, daß eine Maskentechnik verwendet wird, wobei eine Lochmaske verwendet wird, die ein Loch für den Durchtritt des Laserstrahles aufweist, welches mindestens auf der Seite, auf welcher die Flanke zu erzeugen ist, nach außen verjüngt zuläuft.

6. Verfahren nach Anspruch 5, dadurch gekennzeichnet, daß die Maske bzw. das Loch der Maske die Form einer Ellipse oder Raute, gegebenenfalls mit einem konstant breiten mittleren Teil, hat.

7. Verfahren nach einem der Ansprüche 1 bis 6, dadurch gekennzeichnet, daß die bei der Bearbeitung entstehenden Gase von der Oberfläche des Keramikteiles abgesaugt werden.

8. Verfahren nach einem der Ansprüche 1 bis 7, dadurch gekennzeichnet, daß ein Excimerlaser verwendet wird.

9. Verfahren nach einem der Ansprüche 1 bis 8, dadurch gekennzeichnet, daß die Strahlung des Lasers eine Wellenlänge von weniger als 380 nm hat.

10. Verfahren nach einem der Ansprüche 1 bis 9, dadurch gekennzeichnet, daß bei der Strukturerzeugung der Laserstrahl (LS) zusammen mit der Maske (M) oder im Bereich des Maskenloches eine kreisförmige Bewegung ausführt, die von einer Translationsbewegung überlagert ist.

11. Verfahren nach einem der Ansprüche 1 bis 10, dadurch gekennzeichnet, daß der Siliciumdioxidanteil (SiO₂-Anteil) der Keramik mehr als 50 %, vorzugsweise mehr als 60 % und besonders bevorzugt 65 % beträgt.

12. Verfahren nach einem der Ansprüche 1 bis 11, dadurch gekennzeichnet, daß der Aluminiumoxidanteil (Al₂O₃-Anteil) der Keramik auf einen Wert zwischen 1 % und 35 %, vorzugsweise zwischen 15 % und 30 % und besonders bevorzugt auf 25 % eingestellt wird.

13. Verfahren nach einem der Ansprüche 1 bis 10, dadurch gekennzeichnet, daß die Keramik eine Glaskeramik oder eine metallische Sinterkeramik ist.

14. Verfahren nach einem der Ansprüche 1 bis 13, dadurch gekennzeichnet, daß ein Ultraviolett-Excimerleser zur Erzeugung der Struktur verwendet wird.

15. Verfahren nach einem der Ansprüche 1 bis 13, dadurch gekennzeichnet, daß ein XeCl- oder XeF-Laser zur Erzeugung der Strukturen verwendet wird.

## Claims

1. A process for the production of structured ceramic surfaces, wherein the surface of a ceramic portion (K) is swept by a laser beam (LS) in accordance with a predetermined structure pattern and ceramic material is thereby removed, wherein the laser beam (LS) producing the structure is of a wavelength which is shorter than that of visible light, characterised in that to produce structures of more than 0.1 mm in depth and/or more than 1 mm in width a porous, gas-permeable ceramic material (K), the term ceramic also including glass ceramic and sintered metals, with a porosity of at least 15% is used, and that the laser treatment of the ceramic surface is effected after sintering and possibly grinding of the ceramic portion (K).

2. A process according to claim 1 characterised in that the porosity is in the range of between 20% and 50% and preferably in the range of between 30% and 45%.

3. A process according to one of claims 1 and 2 characterised in that the structures which are produced in the form of depressions are produced with a transition to the remaining part of the ceramic surface with a flank angle of less than 70° with respect to said surface of the ceramic portion, preferably with a flank angle of less than 60°.

4. A process according to one of claims 1 to 3 characterised in that the flank angle of the structures which are produced in the surface is produced by setting a suitable intensity profile for the laser beam (LS).

5. A process according to claim 4 characterised in that a mask procedure is employed, using an apertured mask having a hole for the passage therethrough of the laser beam, said hole converging in an outwardly tapering configuration at least on the side on which the flank is to be produced.

6. A process according to claim 5 characterised in that the mask or the hole in the mask is in the form of an ellipse or rhombus, possibly with a central part of constant width.

7. A process according to one of claims 1 to 6 characterised in that the gases which are formed in the treatment procedure are sucked away from the surface of the ceramic portion.

8. A process according to one of claims 1 to 7 characterised in that an excimer laser is used.

9. A process according to one of claims 1 to 8 characterised in that the radiation of the laser is of a wavelength of less than 380 nm.

10. A process according to one of claims 1 to 9 characterised in that in the production of the structure the laser beam (LS) together with the mask (M) or in the region of the hole in the mask performs a circular movement on which a translatory movement is superimposed.

11. A process according to one of claims 1 to 10 characterised in that the silicon dioxide proportion (SiO₂-proportion) of the ceramic is more than 50%, preferably more than 60% and particularly preferably 65%.

12. A process according to one of claims 1 to 11 characterised in that the aluminium oxide proportion (Al₂O₃-proportion) of the ceramic is set to a value of between 1% and 35%, preferably between 15% and 30% and particularly preferably 25%.

13. A process according to one of claims 1 to 10 characterised in that the ceramic is a glass ceramic or a metallic sintered ceramic.

14. A process according to one of claims 1 to 13 characterised in that an ultra-violet excimer laser is used to produce the structure.

15. A process according to one of claims 1 to 13 characterised in that an XeCl- or XeF-laser is used to produce the structures.

## Revendications

1. Procédé pour fabriquer des surfaces céramiques structurées, selon lequel on balaye la surface d'une pièce céramique (K) avec un faisceau laser (LS) conformément à un modèle de structure prédéterminé et on enlève de ce fait un matériau céramique, et le rayonnement laser (LS) produisant la structure possède une longueur d'onde, qui est inférieure à celle de la lumière visible, caractérisé en ce que pour la production de structures d'une profondeur supérieure à 0,1 mm et/ou d'une largeur supérieure à 1 mm, on utilise un matériau céramique poreux (K), perméable aux gaz possédant une porosité égale au moins à 15 %, le matériau céramique englobant également le vitrocérame et des métaux frittés, et que l'usinage de la surface céramique par laser est exécuté après le frittage et éventuellement après le ponçage de la pièce céramique (K).

2. Procédé selon la revendication 1, caractérisé en ce que la porosité est située dans la gamme comprise entre 20 % et 50 % et de préférence dans la gamme comprise entre 30 % et 45 %.

3. Procédé selon l'une des revendications 1 ou 2, caractérisé en ce que les structures produites sous la forme de renfoncements sont réalisés de manière à établir avec la partie restante de la surface céramique une jonction avec un angle de flanc inférieur à 70° par rapport à cette surface de la pièce céramique, de préférence avec un angle de flanc inférieur à 60°.

4. Procédé selon l'une des revendications 1 à 3, caractérisé en ce que l'angle de flanc des structures usinées dans la surface est obtenu par réglage d'un profil correspondant d'intensité du faisceau laser (LS).

5. Procédé selon la revendication 4, caractérisé en ce qu'on utilise une technique à masque, en employant un masque à trou, qui comporte un trou prévu pour le passage du faisceau laser le trou ayant une forme rétrécie en direction de l'extrémité, au moins du côté sur lequel le flanc doit être produit.

6. Procédé selon la revendication 5, caractérisé en ce que le masque ou le trou du masque possède la forme d'une ellipse ou d'un losange, éventuellement avec une partie médiane de largeur constante.

7. Procédé selon l'une des revendications 1 à 6, caractérisé en ce que les gaz, qui apparaissent lors de l'usinage, sont évacués, par aspiration, de la surface de la pièce céramique.

8. Procédé selon l'une des revendications 1 à 7, caractérisé en ce qu'on utilise un laser excimère.

9. Procédé selon l'une des revendications 1 à 8, caractérisé en ce que le rayonnement du laser possède une longueur d'onde inférieure à 380 nm.

10. Procédé selon l'une des revendications 1 à 9, caractérisé en ce que dans le cas de la production de la structure, le faisceau laser (LS) exécute, conjointement avec le masque (M) ou dans la partie du trou du masque, un déplacement circulaire, auquel est superposé un déplacement de translation.

11. Procédé selon l'une des revendications 1 à 10, caractérisé en ce que le pourcentage de bioxyde de silicium (pourcentage de SiO₂) de la céramique est supérieur à 50 %, de préférence supérieur à 60 % et notamment égal de préférence 65 %.

12. Procédé selon l'une des revendications 1 à 11, caractérisé en ce que le pourcentage d'oxyde d'aluminium (pourcentage de Al₂O₃) de la céramique est ajusté à une valeur comprise entre 1 % et 35 %, de préférence entre 15 % et 30 % et notamment égale à 25 %.

13. Procédé selon l'une des revendications 1 à 10, caractérisé en ce que la céramique est un vitrocérame ou une céramique frittée métallique.

14. Procédé selon l'une des revendications 1 à 13, caractérisé en ce qu'on utilise un laser excimère à ultraviolet pour la production de la structure.

15. Procédé selon l'une des revendications 1 à 13, caractérisé en ce qu'on utilise un laser au XeCl ou au XeF pour produire les structures.
